# FASCICULE DE BREVET EUROPEEN

(11) **EP 1 099 628 B1**
(45) Date de publication et mention de la délivrance du brevet: **04.02.2004**
(21) Numéro de dépôt: 00403095.3
(22) Date de dépôt: 08.11.2000
(51) Int. Cl.: B64D 13/06

(54) **Procédé et dispositif d'alimentation d'une entrée d'air frais de la cabine d'un aéronef propulsé à réaction**
Verfahren und Vorrichtung zur Frischluftzufuhr eines Luftfahrzeuges mit Strahlantrieb
Method and device for feeding fresh air to the cockpit of a jet-propelled aircraft

(30) Priorité: 10.11.1999 FR 9914147
(43) Date de publication de la demande: 16.05.2001
(73) Titulaire: DASSAULT AVIATION, 75008 Paris (FR)
(72) Inventeur: Laügt, Paul, 33127 Martignas (FR)
(74) Mandataire: Colas, Jean-Pierre

(56) Documents cités:
- FR-A- 2 609 686
- US-A- 4 419 926
- US-A- 5 482 229

## Description

La présente invention est relative à un procédé d'alimentation d'une entrée d'air frais de la cabine d'un aéronef propulsé par au moins un moteur à réaction et. plus particulièrement, à un tel procédé suivant lequel on comprime de l'air prélevé sur le moteur dans un turbocompresseur, on refroidit l'air ainsi comprimé dans un échangeur de chaleur traversé par de l'air extérieur à l'aéronef, on alimente une roue de turbine du turbocompresseur avec l'air ainsi refroidi et on alimente l'entrée d'air frais avec l'air sortant de la roue de turbine.

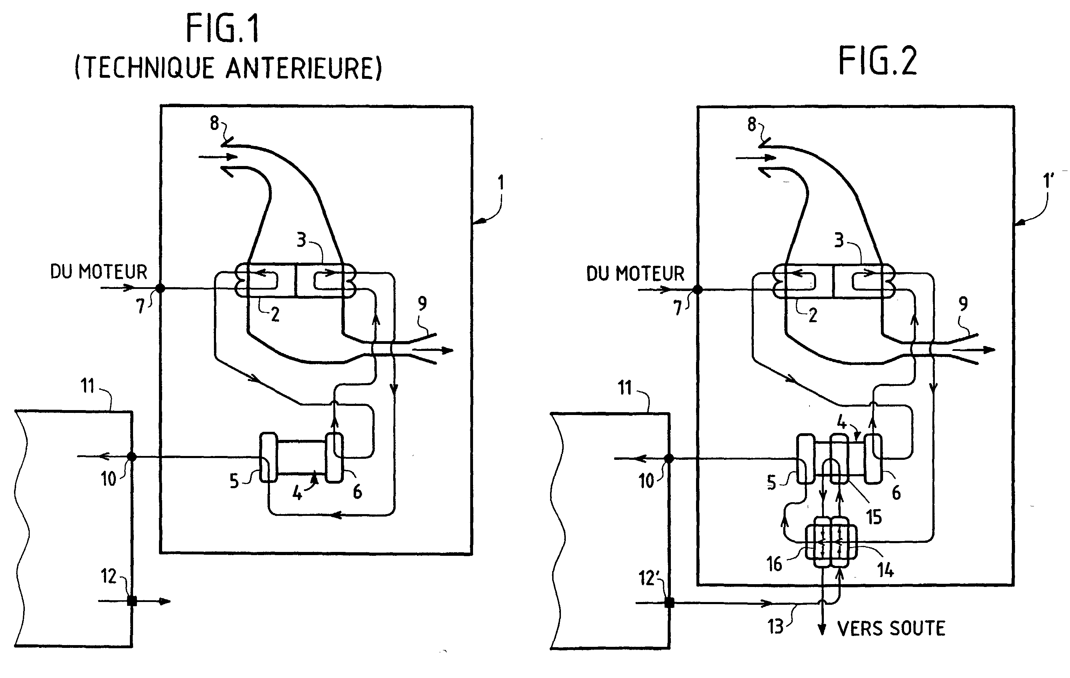

On a schématisé à la figure 1 du dessin annexé un dispositif d'alimentation en air frais de la cabine d'un aéronef, d'un type connu. Comme représenté, ce dispositif 1 comprend essentiellement un pré-échangeur de chaleur 2, un échangeur de chaleur 3 et un turbocompresseur 4 constitué d'une roue de turbine 5 et d'un compresseur 6.

Le pré-échangeur 2 est connecté à une entrée d'air 7 prélevé sur un étage du compresseur d'un moteur à réaction propulsant l'aéronef, quand celui-ci vole à sa vitesse de croisière. Cet air, dont la température atteint couramment plusieurs centaines de degrés, est refroidi dans le pré-échangeur 2 par un balayage d'air prélevé à l'extérieur de l'aéronef par une bouche d'air 8 alimentant une chambre de l'échangeur, l'air de balayage étant évacué par la sortie 9 de cette chambre.

L'air venu du moteur et sortant du pré-échangeur 2 est suffisamment refroidi pour pouvoir passer dans le compresseur 6, couramment réalisé en alliage léger. L'air comprimé, et donc réchauffé, qui sort du compresseur 6 est refroidi de nouveau dans l'échangeur 3, par le même balayage d'air extérieur circulant entre la bouche 8 et la sortie 9, de manière à revenir sensiblement à la température de l'air de balayage.

L'air sortant de l'échangeur 3 passe enfin dans la roue de turbine 5 qui anime le compresseur 6. La détente de l'air dans cette roue de turbine fait tomber sa température à une valeur relativement basse, de l'ordre de 3°C par exemple, propre à alimenter l'entrée 10 d'air frais de la cabine 11 de l'aéronef (partiellement schématisée à la figure 1) en évitant tout risque de givrage des conduits dans lesquels il passe.

L'air frais à 3°C délivré à la cabine se mélange à l'air contenu dans celle-ci pour le rafraîchir. Une ou plusieurs soupapes 12 formant partie d'un système de pressurisation de la cabine 11 régule la pression d'air en cabine en laissant échapper une fraction de l'air de la cabine à l'extérieur de celle-ci.

Une fraction de la consommation en carburant du moteur à réaction sur lequel on prélève l'air qui alimente le dispositif décrit ci-dessus est évidemment attachée à ce prélèvement. Par ailleurs, l'écart ΔT entre la température de l'air entrant dans la cabine (3°C environ) et la température de l'air en cabine (20°C environ) soit ΔT = 17° environ, est relativement faible et oblige à dimensionner le dispositif de manière qu'il puisse fournir à la cabine un débit d'air refroidi relativement important qui grève l'encombrement, le poids et, par conséquent, le coût de fabrication de ce dispositif.

On connaît aussi de FR-A- 2 609 686 une installation de conditionnement d'air pour aeronef comprenant des moyens d'exploitation, dans cette installation, de l'energie de l'air sortant de la cabine de l'aeronef.

La présente invention a précisément pour but de fournir un procédé d'alimentation d'une entrée d'air frais de la cabine d'un aéronef propre à être mis en oeuvre avec un dispositif apportant une réduction de la consommation en carburant du moteur sur lequel ce dispositif prélève de l'air comprimé, le dispositif étant en outre plus léger, moins encombrant et de fabrication moins coûteuse que le dispositif de la technique antérieure décrit en préambule de la présente description.

On atteint ce but de la présente invention avec un procédé d'alimentation d'une entrée d'air frais de la cabine d'un aéronef propulsé par au moins un moteur à réaction, du type décrit en préambule de la présente description et dans lequel on prélève de l'énergie mécanique dans de l'air sortant de la cabine de l'aéronef, on injecte ladite énergie mécanique dans le turbocompresseur à l'aide d'une deuxième roue de turbine couplée à la première, et on prélève en outre de l'énergie de refroidissement dans l'air sortant de la cabine de l'aéronef, ce procédé étant remarquable en ce qu'on injecte l'énergie ainsi prélevée dans l'air refroidi sortant de l'échangeur placé en aval du compresseur, à l'aide de deuxième et troisième échangeurs de chaleur placés respectivement en amont et en aval de la deuxième roue de turbine.

Comme on le verra plus loin en détail, ce procédé permet de délivrer à la cabine un air à plus basse température et pouvant donc présenter un plus faible débit que celui délivré par le dispositif de la figure 1, au bénéfice de la consommation en carburant du moteur à réaction sur lequel l'air est prélevé, et au bénéfice du poids, de l'encombrement et donc du coût de fabrication du dispositif conçu pour mettre en oeuvre le procédé suivant l'invention.

Ce dispositif, qui comprend une entrée d'air venu du moteur, un turbocompresseur comprenant une roue de turbine et un compresseur alimenté par l'air venu du moteur, un échangeur alimenté par l'air sortant dudit compresseur pour refroidir ledit air à l'aide d'un courant d'air extérieur à l'aéronef, la sortie d'air refroidi de l'échangeur alimentant la roue de turbine, une deuxième roue de turbine couplée à la première roue et alimentée par de l'air extrait de la cabine de l'aéronef, des moyens alimentés par l'air extrait de la cabine pour refroidir l'air venu du moteur et sortant de l'échangeur, étant remarquable en ce que lesdits moyens comprennent a) un deuxième échangeur de chaleur pour réchauffer l'air venu de la cabine et délivré à la deuxième roue de turbine et pour refroidir l'air venu du moteur et sortant du premier échangeur et b) un troisième échangeur de chaleur pour réchauffer l'air sortant de la deuxième roue de turbine et pour refroidir l'air venu du moteur.

D'autres caractéristiques et avantages de la présente invention apparaîtront à la lecture de la description qui va suivre et à l'examen du dessin annexé dans lequel :
- la figure 1 est un schéma d'un dispositif d'alimentation en air frais de la cabine d'un aéronef propulsé par un moteur à réaction, connu de la technique antérieure et décrit en préambule de la présente description, et
- la figure 2 est un schéma d'un dispositif du même type, modifié pour assurer la mise en oeuvre du procédé suivant la présente invention.

On se réfère à la figure 2 du dessin annexé où des repères numériques identiques à des repères utilisés sur la figure 1 désignent des organes ou appareils identiques ou analogues. C'est ainsi que l'on retrouve, dans le dispositif 1' suivant l'invention, les organes ou appareils référencés 2 à 11 sur la figure 1.

Le dispositif 1' suivant l'invention se distingue ainsi de celui de la figure 1 essentiellement en ce qu'il comprend des moyens propres à prélever de l'énergie mécanique et/ou de l'énergie de refroidissement dans l'air sortant de la cabine à travers une soupape de pressurisation 12' de cette cabine.

On remarquera à cet égard que, dans le dispositif de la technique antérieure décrit ci-dessus en liaison avec la figure 1, l'air qui sort de la cabine par la soupape 12 perd toute son énergie à l'extérieur de cette cabine, sans que cette énergie fasse l'objet d'une quelconque utilisation.

Suivant l'invention, au contraire, on récupère au moins une partie sensible de cette énergie pour faire fonctionner le dispositif 1'. Pour ce faire, l'air qui sort de la cabine par la soupape 12' est conduit par une tubulure 13 dans un deuxième échangeur de chaleur 14 où il échange de la chaleur avec l'air qui sort de l'échangeur 3, passe ensuite dans une deuxième roue de turbine 15 du turbocompresseur 4, couplée à la première roue 5, où il se détend avant de traverser un troisième échangeur 16 où il échange de nouveau de la chaleur avec l'air qui a traversé le pré-échangeur 2 et les échangeurs 3 et 14, dans cet ordre. Cet air s'échappe enfin vers l'extérieur ou dans un autre compartiment de l'aéronef tel qu'une soute exigeant, elle aussi, un certain conditionnement d'air.

C'est ainsi que l'air sortant de l'échangeur 3, à une température voisine de celle de l'air avalé par la bouche 8, est refroidi dans l'échangeur 14 par l'air venu de la cabine, à 20°C par exemple, alors que ce dernier est lui-même réchauffé avant de pénétrer dans la roue de turbine 15. Ce réchauffement permet avantageusement de relever la puissance mécanique délivrée par la roue de turbine 15 au compresseur 6 du turbocompresseur 4, pour un même taux de détente de l'air dans la roue de turbine 15.

La détente de l'air venu de la cabine 11 dans la roue de turbine 15 a pour effet de le refroidir. L'air ainsi refroidi alimente le troisième échangeur 16 pour y refroidir encore l'air venu du moteur, qui vient de subir un refroidissement dans le deuxième échangeur 14. A la sortie de l'échangeur 16, l'air venu du moteur passe dans la roue de turbine 5 où il se détend en délivrant de l'énergie mécanique au compresseur 6, énergie qui s'additionne à celle délivrée par la roue de turbine 15. Pendant cette détente, la température de l'air venu du moteur tombe encore, cet air alimentant finalement l'entrée 10 d'air frais de la cabine 11.

L'air venu de la cabine qui traverse finalement l'échangeur 16 s'y réchauffe pour assurer le conditionnement d'air de la soute évoquée ci-dessus, par exemple. Il peut aussi être simplement évacué dans l'espace.

Il apparaît maintenant que l'air venu de la cabine délivre de l'énergie mécanique au turbocompresseur 4 et de l'énergie de refroidissement (des frigories) à l'air destiné à alimenter l'entrée d'air frais de la cabine. L'énergie ainsi récupérée sur celle de l'air sortant de la cabine, qui se dissipait auparavant sans fruit dans l'espace entourant l'aéronef, permet de réduire le prélèvement d'énergie opéré sur le moteur à réaction de l'aéronef, au bénéfice de la consommation en carburant de celui-ci, ceci conformément à l'un des buts poursuivis par la présente invention.

A titre d'exemple illustratif et non limitatif seulement, dans le cas d'un vol "dimensionnant" à vitesse supersonique maximale, à l'altitude maximale, par jour chaud, avec une buse d'entrée d'air 8 de ventilation des échangeurs 2 et 3 placé dans des pièges à couche limite du moteur délivrant de l'air à 109°C environ, la température et la pression de l'air délivré par le moteur, depuis la sortie de celui-ci jusqu'à l'entrée 10 en cabine, suivent des évolutions du type décrit par le tableau suivant :

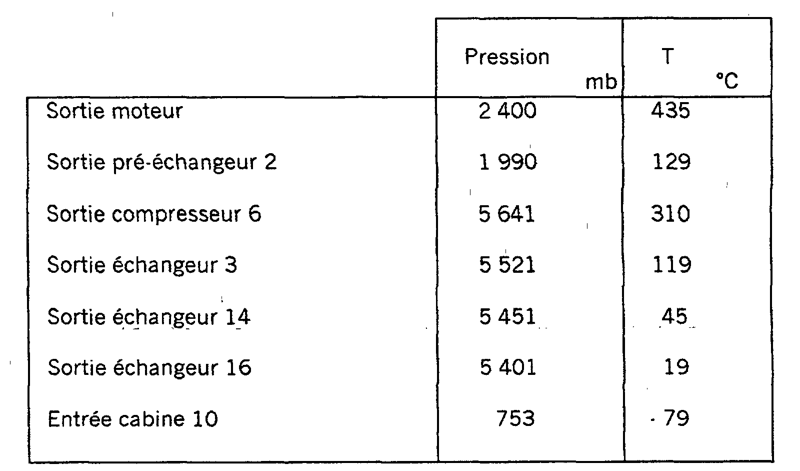

II ressort de l'examen de ce tableau que le dispositif suivant l'invention est capable de fournir à la cabine de l'air à - 79°C environ, alors que le dispositif de la technique antérieure décrit en liaison avec la figure 1 ne peut fournir que de l'air à 3°C environ.

Cet air de refroidissement à -79°C présente un écart de température d'environ 100° avec l'air (à 20°) de la cabine, alors l'écart correspondant du dispositif de la figure 1 est de 20° - 3° = 17° environ. Sa capacité à refroidir l'air de cabine est ainsi environ 6 fois supérieure à celle de l'air de refroidissement fourni par le dispositif de la figure 1. Il s'ensuit que le débit d'air de refroidissement peut être très fortement diminué, sensiblement dans le même rapport, ce qui permet de réduire l'encombrement, le poids et le coût de fabrication du dispositif suivant l'invention, tout comme la consommation de carburant supplémentaire attachée à la fourniture d'air au dispositif, par le compresseur du moteur, comme on l'a vu plus haut.

On notera que la disposition des échangeurs 14 et 16 est telle qu'elle écarte tout givrage de ceux-ci (cf. le tableau ci-dessus) lié à la vapeur d'eau dégagée par les passagers de la cabine, ce qui accroît le rendement global des moyens de refroidissement utilisés.

Il est clair que le dispositif suivant l'invention exige une modification du tarage des soupapes 12' qui font partie du système de pressurisation de la cabine. Auparavant, la perte de charge dans ces soupapes pouvait sans inconvénient atteindre environ 700 mb, soit la différence entre la pression en cabine et la pression extérieure.

Suivant l'invention, ce tarage doit être réduit au minimum, soit à 50 mb environ par exemple, de manière que l'air sortant de la cabine présente une pression aussi élevée que possible pour que le dispositif suivant l'invention puisse tirer de cet air une énergie mécanique maximale. La régulation de la pression en cabine, sur une excursion de 50 mb seulement, permet d'améliorer en outre la précision de cette pression.

Bien entendu, l'invention n'est pas limitée au mode de réalisation décrit et représenté, qui n'a été donné qu'à titre d'exemple. C'est ainsi qu'on ne sortirait pas du cadre de l'invention en extrayant seulement de l'énergie mécanique ou seulement de l'énergie de refroidissement, de l'air sortant de la cabine, au profit du dispositif suivant l'invention. C'est ainsi encore que, si l'invention est décrite ci-dessus dans l'environnement d'un aéronef volant à des vitesses de croisière supersoniques, l'invention est également applicable à tout aéronef, notamment et à titre d'exemple seulement, à de gros porteurs subsoniques conçus pour transporter plusieurs centaines de passagers dont le fort rayonnement thermique cumulé exige un dispositif de rafraîchissement de l'air de cabine de forte capacité.

## Revendications

1. Procédé d'alimentation d'une entrée (10) d'air frais de la cabine (11) d'un aéronef propulsé par au moins un moteur à réaction, suivant lequel on comprime de l'air prélevé sur ledit moteur dans un turbocompresseur (4), on refroidit l'air ainsi comprimé dans un premier échangeur de chaleur (3) traversé par de l'air extérieur à l'aéronef, on alimente une première roue de turbine (5) dudit turbocompresseur (4) avec l'air ainsi refroidi, on alimente ladite entrée d'air frais (10) avec l'air sortant de ladite première roue de turbine (5), on prélève de l'énergie mécanique dans de l'air sortant de ladite cabine (11) de l'aéronef, on injecte ladite énergie mécanique dans ledit turbocompresseur (4) à l'aide d'une deuxième roue de turbine (15) couplée à la première (5), et on prélève en outre de l'énergie de refroidissement dans ledit air sortant de la cabine (11), **caractérisé en ce qu'**on injecte ladite énergie de refroidissement en amont de la première roue de turbine (5) dans ledit air refroidi sortant dudit échangeur (3) à l'aide d'un deuxième (14) et d'un troisième (16) échangeurs de chaleur placés respectivement en amont et en aval de ladite deuxième roue de turbine (15).

2. Dispositif pour la mise en oeuvre du procédé conforme à la revendication 1, comprenant une entrée (7) d'air venu du moteur, un turbocompresseur (4) comprenant une première roue de turbine (5) et un compresseur alimenté par l'air venu du moteur, un premier échangeur (3) alimenté par l'air sortant dudit compresseur (5) pour refroidir ledit air à l'aide d'un courant d'air extérieur à l'aéronef, la sortie d'air refroidi du premier échangeur (3) alimentant ladite première roue de turbine (5), une deuxième roue de turbine (15) couplée à la première roue (5) et alimentée par de l'air extrait de la cabine (11), des moyens alimentés premier échangeur (3), **caractérisé en ce que** lesdits moyens comprennent a) un deuxième échangeur de chaleur (14) pour réchauffer l'air venu de la cabine et délivré à ladite deuxième roue de turbine (15) et pour refroidir en amont de la première roue de turbine (5) l'air venu du moteur et sortant dudit premier échangeur de chaleur (3), et b) un troisième échangeur de chaleur (16) pour réchauffer l'air sortant de ladite deuxième roue de turbine (15) et pour refroidir en amont de la première roue de turbine (5) l'air venu du moteur et sortant dudit premier échangeur (3).

3. Dispositif conforme à la revendication 2, **caractérisé en ce qu'**il comprend en outre un pré-échangeur de chaleur (2) directement connecté à l'entrée (7) d'air venu du moteur pour refroidir cet air, par un balayage d'air extérieur à l'aéronef.

4. Dispositif conforme à l'une quelconque des revendications 2 et 3, **caractérisé en ce que** l'air de cabine qui l'alimente sort de ladite cabine (11) à travers une soupape (12') formant partie du système de pressurisation de la cabine (11).

5. Aéronef équipé d'un dispositif d'alimentation en air frais conforme à l'une quelconque des revendications 2 à 4.

## Patentansprüche

1. Verfahren zur Versorgung eines Einlasses (10) für frische Luft der Kabine (11) eines von mindestens einem Strahltriebwerk angetriebenen Luftfahrzeugs, demzufolge aus dem Triebwerk einbehaltene Luft in einem Turboverdichter (4) verdichtet wird, die so verdichtete Luft in einem ersten, von der in Bezug auf das Luftfahrzeug äußeren Luft durchquerten Wärmeaustauscher (3) abgekühlt wird, ein erstes Turbinenrad (5) des Turboverdichters (4) mit der derart abgekühlten Luft beschickt wird, der Einlass für frische Luft (10) mit der aus dem ersten Turbinenrad (5) austretenden Luft versorgt wird, mechanische Energie aus Luft gewonnen wird, die aus Kabine (11) austritt, die mechanische Energie mit Hilfe eines zweiten, mit dem ersten (5) gekoppelten Turbinenrades (15) in den Turboverdichter (4) eingebracht wird und außerdem Abkühlungsenergie aus der aus der Kabine (11) austretenden Luft gewonnen wird, **dadurch gekennzeichnet, dass** die Abkühlungsenergie in Strömungsrichtung vor dem ersten Turbinenrad (5) mit Hilfe eines zweiten (14) und eines dritten (16) jeweils in Strömungsrichtung vor und hinter dem zweiten Turbinenrad (15) angebrachten Wärmeaustauschers in die aus dem Austauscher (3) austretende abgekühlte Luft eingebracht wird.

2. Vorrichtung zum Ausführen des Verfahrens nach Anspruch 1, umfassend einen Einlass (7) für aus dem Triebwerk stammende Luft, einen Turboverdichter (4), umfassend ein erstes Turbinenrad (5) und einen von der aus dem Triebwerk stammenden Luft beschickten Verdichter, einen ersten Austauscher (3), beschickt mit der aus dem Verdichter (5) austretenden Luft, um die Luft mit Hilfe eines in Bezug auf das Luftfahrzeug äußeren Luftstroms abzukühlen, wobei der Austritt für abgekühlte Luft des ersten Austauschers (3) das erste Turbinenrad (5)versorgt, ein zweites Turbinenrad (15), das mit dem ersten Rad (5) gekoppelt ist und mit aus der Kabine (11) herausgezogener Luft versorgt wird, mit der aus der Kabine (11) herausgezogenen Luft versorgte Mittel, um die aus dem Triebwerk stammende und aus dem ersten Austauscher (3) austretende Luft abzukühlen, **dadurch gekennzeichnet, dass** die Mittel umfassen a) einen zweiten Wärmeaustauscher (14), um die aus der Kabine stammende und an das zweite Turbinenrad (15) gelieferte Luft zu erwärmen, und um in Strömungsrichtung vor dem ersten Turbinenrad (5) die aus dem Triebwerk stammende und aus dem ersten Wärmeaustauscher (3) austretende Luft abzukühlen, und b) einen dritten Wärmeaustauscher (16), um die aus dem zweiten Turbinenrad (15) austretende Luft zu erwärmen und in Strömungsrichtung vor dem ersten Turbinenrad (5) die aus dem Triebwerk stammende und aus dem ersten Austauscher (3) austretende Luft abzukühlen.

3. Vorrichtung nach Anspruch 2, **dadurch gekennzeichnet, dass** sie außerdem einen unmittelbar mit dem Einlass (7) für aus dem Triebwerk stammende Luft verbundenen Voraustauscher (2) für Wärme umfasst, um diese Luft abzukühlen, mittels eines Spülvorgangs mit in Bezug auf das Luftfahrzeug äußerer Luft.

4. Vorrichtung nach einem der Ansprüche 2 und 3, **dadurch gekennzeichnet, dass** die Luft der Kabine, die sie versorgt, aus der Kabine (11) über ein Ventil (12) austritt, das einen Teil der Systems zur Druckbeaufschlagung der Kabine (11) bildet.

5. Luftfahrzeug, ausgerüstet mit einer Vorrichtung zur Versorgung mit frischer Luft gemäß einem der Ansprüche 2 bis 4.

## Claims

1. A method of feeding a cool air inlet (10) of a cabin (11) of an aircraft propelled by at least one jet engine, in which method air bled from said engine is compressed in a turbocompressor (4), the air compressed in this way is cooled in a first heat exchanger (3) through which air outside the aircraft passes, a first turbine stage (5) of said turbocompressor (4) is fed with the air cooled in this way, said cool air inlet (10) is fed with the air leaving said first turbine stage (5), mechanical energy is extracted from the air leaving said cabin (11) of the aircraft, said mechanical energy is injected into said turbocompressor (4) by means of a second turbine stage (15) coupled to the first turbine stage (5), and cooling energy is additionally extracted from said air leaving the cabin (11), **characterized in that** said cooling energy is injected upstream said first turbine stage (5) into said cooled air leaving said exchanger (3) with the aid of a second heat exchanger (14) and a third heat exchanger (16) located respectively upstream and downstream of said second turbine stage (15).

2. A system for implementing the method according to claim 1, including an inlet (7) for air bled from the engine, a turbocompressor (4) including a first turbine stage (5) and a compressor fed with the air bled from the engine, a first exchanger (3) fed with the air leaving said compressor (5) to cool said air with the air of a flow of air outside the aircraft, the cooled air outlet of the first exchanger (3) feeding said first turbine stage (5), a second turbine stage (15) coupled to the first turbine stage (5) and fed with air extracted from the cabin (11), means fed with said air extracted from the cabin (11) for cooling the air bled from the engine and leaving said first exchanger (3), **characterized in that** said means include a) a second heat exchanger (14) for heating the air coming from the cabin and delivered to said second turbine stage (15) and for cooling upstream said first turbine stage (5) the air bled from the engine and leaving said first heat exchanger (3), and b) a third heat exchanger (16) for heating the air leaving said second turbine stage (15) and for cooling upstream said first turbine stage (5) the air bled from the engine and coming out of the first exchanger (3).

3. A system according to claim 2, **characterized in that** it comprises a heat pre-exchanger (2) connected directly to the inlet (7) for air bled from the engine to cool that air with a flow of air outside the aircraft.

4. A system according to any of claim 2 and 3, **characterized in that** the air from the cabin which feeds said system leaves said cabin (11) via a valve (12') forming part of the system for pressurizing the cabin (11).

5. Aircraft equipped with a system according to any of claims 2 to 4.
